# EUROPÄISCHE PATENTANMELDUNG

(11) **EP 4 489 239 A1**
(43) Veröffentlichungstag der Anmeldung: **08.01.2025**
(21) Anmeldenummer: 23184317.8
(22) Anmeldetag: 07.07.2023
(51) Int. Cl.: H02G 3/12, H02G 3/08

(54) **LEICHTBAUDOSE MIT AUSKLAPPBAREN FLÜGELN**

(71) Anmelder: HSB Weibel AG, 9435 Heerbrugg SG (CH)
(72) Erfinder: STEIGER, Thomas, 9436 Balgach (CH)
(74) Vertreter: Kaminski Harmann

(57) **Zusammenfassung**

Die vorliegende Erfindung betrifft eine Leichtbaudose 1 für gebäudetechnische Installationen, wobei die Leichtbaudose 1 einen durch einen Bodenbereich 2, eine umlaufende Wand 3 und eine dem Bodenbereich 2 gegenüberliegende Einführöffnung 4 gebildeten Dosenkörper 5, mindestens einen nach aussen abstehenden Stützflansch 7, mindestens ein Schraubloch 8 und mindestens einen Flügel 9 aufweist, wobei der mindestens eine Flügel 9 dazu ausgebildet ist, an eine Innenseite der Gebäudewand-Ausnehmung angedrückt zu werden und somit die Leichtbaudose 1 in der Gebäudewand-Ausnehmung zu befestigen, aussen an der umlaufenden Wand 3 angeordnet ist, und sich entlang der um laufenden Wand 3 und von der um laufenden Wand 3 beabstandet erstreckt, wobei der mindestens eine Flügel 9 und das mindestens eine Schraubloch 8 derart ausgebildet und angeordnet sind, dass durch ein Eindrehen der mindestens einen Schraube 22 in das mindestens eine Schraubloch 8 sowohl die mindestens eine gebäudetechnische Installation an die Leichtbaudose 1 angeschraubt wird als auch ein Auslenken des mindestens einen Flügels 9 in radialer Richtung bereitgestellt wird, sodass der mindestens eine Flügel 9 gegen die Innenseite der Gebäudewand-Ausnehmung angedrückt wird.

## Beschreibung

### Gebiet der Erfindung

Die vorliegende Erfindung betrifft eine Leichtbaudose für gebäudetechnische Installationen, insbesondere elektrische Installationsgeräte, wobei die Leichtbaudose vorgesehen ist an einer Gebäudewand befestigt und in an der Gebäudewand befestigtem Zustand durch die Gebäudewand getragen zu werden.

### Hintergrund der Erfindung

Leichtbau- bzw. Hohlwanddosen sind insbesondere dafür vorgesehen, im Leicht- und Ständerbau eingesetzt zu werden. Hierbei ist die Gebäudewand beispielsweise eine ein oder mehrschichtige Wand aus Holzplatten oder einer Kombination von Gipskartonplatten und Holzplatten mit einem Hohlraum dahinter, also eine sogenannte Hohlwand. Um diesen Hohlraum auszubilden, ist beispielsweise die Holzplatte mit einer geringen Wandstärke ausgebildet.

Da die Hohlwand eine geringe Wandstärke und zudem, zum Beispiel im Falle einer Gipskartonplatte, eine geringe Haltekraft für Befestigungsmittel wie Schrauben aufweist, ist es nötig, die Elektronik an die Leichtbaudose anzuschrauben. Diese besteht in der Regel aus einem mechanisch stabilen Material, z.B. einem Kunststoff, das die Schraube sehr fest hält und so eine feste Fixierung der Elektronik in der Leichtbaudose ohne Verziehen oder Aufreissen des Materials auch dann ermöglicht, wenn beispielsweise ein Stecker mehrmals in eine sich in der Leichtbaudose befindliche Steckerbuchse eingesteckt und wieder abgezogen wird. Ein Anschrauben der Elektronik direkt an die Hohlwand führt hingegen dazu, dass beispielsweise das Holz einer Holzwand an der Schraubstelle ausreisst oder der Gips einer Gipswand um das Schraubgewinde herum aufplatzt und sich so die Befestigung der Elektronik an der Hohlwand mit der Zeit lockert.

Aus diesem Grund weisen Leichtbaudosen des Stands der Technik zur Fixierung der Leichtbaudose in der Hohlwand speziell dafür vorgesehene Anpressmittel auf, die mit einer im Vergleich zur Fläche einer Schraubstelle vergrösserten Befestigungsfläche an die (Rückseite der) Hohlwand drücken und so die Befestigung der Leichtbaudose an der Hohlwand bereitstellen. Durch die vergrösserte Befestigungsfläche wird die Gefahr des Ausreissens bzw. Ausleierns der Befestigungsstelle durch die mehrfache Benutzung der Elektronik in der Leichtbaudose deutlich reduziert. Als Anpressmittel werden hierbei in der Regel ausschwenkbare und verfahrbare Kippfüsse verwendet, die an speziell für das Ausschwenken und Verfahren der Kippfüsse vorgesehenen Schrauben angebracht sind. Eine solche Leichtbaudose des Stands der Technik ist beispielsweise in der europäischen Patentanmeldung EP 22172918.9 beschrieben.

Leichtbaudosen des Stands der Technik weisen jedoch die folgenden Nachteile auf. So benötigen diese Leichtbaudosen von den für das Anschrauben der Elektronik an die Leichtbaudose vorgesehenen Schraublöchern separierte Schraubkanäle, in die die für das Ausklappen und Verfahren der Kippfüsse vorgesehenen Schrauben eingebracht sind, und speziell für die Aufnahme der noch eingeklappten Kippfüsse vorgesehene Vertiefungen, wobei sowohl die separaten Schraubkanäle als auch die Vertiefungen für die Kippfüsse zu einer Verringerung des Innenvolumens des Dosenkörpers der Leichtbaudose führen. Eine Vergrösserung des Innenvolumens durch beispielsweise eine Ausweitung des Umfangs der Dosenkörperwand oder eine Vergrösserung der axialen Erstreckung des Dosenkörpers ist aufgrund von einzuhaltenden Normen nicht erwünscht. Da in der heutigen Zeit, die gebäudetechnischen Installationen, insbesondere die elektrischen Installationsgeräte, immer grösser werden (z.B. durch das Aufkommen von Bildschirmen mit Touch-Pad-Funktionen), ist eine Maximierung des Innenvolumens des Dosenkörpers angestrebt, um den Einbau dieser vergrösserten Elektronik zu ermöglichen, bei gleichzeitiger Einhaltung der Normen für die axiale und radiale Ausdehnung der Leichtbaudose.

Des Weiteren stellen die Kippfüsse und die dazugehörigen Schrauben zusätzliche Bauteile dar, wodurch zusätzliche Arbeitsschritte nötig sind, um diese Bauteile an der Leichtbaudose zu montieren. Diese zusätzlichen Bauteile und Arbeitsschritte verursachen jedoch zusätzliche Kosten, da die Materialbeschaffungskosten generell höher sind und zudem zusätzliche Maschinen/Mitarbeiter für die Montage benötigt werden.

Darüber hinaus ist die Montage solcher Leichtbaudosen des Stands der Technik recht aufwendig, da sowohl die Elektronik an die Leichtbaudose angeschraubt werden muss als auch die Kippfüsse mittels der dafür vorgesehenen Schrauben ausgeklappt und angepresst werden müssen.

### Aufgabe der Erfindung

Es ist deshalb eine Aufgabe der Erfindung, eine Leichtbaudose bereitzustellen, die die Nachteile aus dem Stand der Technik überwindet, insbesondere im Lichte der strikten Vorgaben in Bezug auf die etablierten Einbaumasse.

Eine weitere Aufgabe liegt darin, eine Leichtbaudose bereitzustellen, die eine vereinfachte Ausgestaltung der Anpressmittel aufweist, wodurch die Fertigung und/oder die Montage der Leichtbaudose einfacher, schneller und somit auch kostengünstiger ist.

Eine weitere Aufgabe liegt darin, eine Leichtbaudose bereitzustellen, bei welcher das Innenvolumen des Dosenkörpers der Leichtbaudose unter Einhaltung bestimmter Normen vergrössert ist.

Diese Aufgaben werden durch die Verwirklichung zumindest eines Teils der kennzeichnenden Merkmale der unabhängigen Patentansprüche gelöst. Merkmale, welche die Erfindung in alternativer oder vorteilhafter Weise weiterbilden, sind einigen der übrigen Merkmale der unabhängigen Patentansprüche und den abhängigen Patentansprüchen zu entnehmen.

### Zusammenfassung der Erfindung

Die Erfindung betrifft eine Leichtbaudose für gebäudetechnische Installationen, insbesondere elektrische Installationsgeräte, wobei die Leichtbaudose vorgesehen ist in einer Ausnehmung einer Gebäudewand befestigt zu werden, wobei die Leichtbaudose aufweist:
- einen durch einen Bodenbereich, eine umlaufende Wand und eine dem Bodenbereich gegenüberliegende Einführöffnung gebildeten Dosenkörper, wobei
   ∘ ein zumindest durch die umlaufende Wand begrenzter Dosenkörper-Innenraum zur Aufnahme mindestens einer gebäudetechnischen Installation ausgebildet ist, und
   ∘ die mindestens eine gebäudetechnische Installation (in axialer Richtung) durch die Einführöffnung in den Dosenkörper-Innenraum einführbar ist,
- mindestens einen (in radialer Richtung) nach aussen abstehenden Stützflansch, wobei der mindestens eine Stützflansch zum Angelegtwerden an einer Vorderseite der Gebäudewand ausgebildet ist, und
- mindestens ein Schraubloch, wobei die mindestens eine gebäudetechnische Installation vorgesehen ist, durch mindestens eine in das Schraubloch eingedrehte Schraube an die Leichtbaudose angeschraubt zu werden,
wobei die Leichtbaudose mindestens einen Flügel aufweist, wobei der mindestens eine Flügel
- dazu ausgebildet ist, an eine Innenseite der Gebäudewand-Ausnehmung angedrückt zu werden und somit die Leichtbaudose in der Gebäudewand-Ausnehmung zu befestigen,
- aussen an der umlaufenden Wand angeordnet ist, und
- sich (insbesondere zumindest annähernd entgegengesetzt zur axialen Richtung) entlang der umlaufenden Wand und von der umlaufenden Wand beabstandet erstreckt,
wobei der mindestens eine Flügel und das mindestens eine Schraubloch derart ausgebildet und angeordnet sind, dass durch ein Eindrehen der mindestens einen Schraube in das mindestens eine Schraubloch sowohl die mindestens eine gebäudetechnische Installation an die Leichtbaudose angeschraubt wird als auch ein Auslenken des mindestens einen Flügels in radialer Richtung bereitgestellt wird, sodass der mindestens eine Flügel gegen die Innenseite der Gebäudewand-Ausnehmung angedrückt wird.

Unter der axialen Richtung / Axialrichtung wird die Richtung verstanden, in welche die Mittelachse des Dosenkörpers von der Einführöffnung hin zum Bodenbereich verläuft. Diese Richtung entspricht auch der Einführrichtung der mindestens einen gebäudetechnischen Installation in den Dosenkörper-Innenraum. Unter der radialen Richtung wird die Richtung verstanden, in welche sich eine orthogonal zur Mittelachse des Dosenkörpers angeordnete Ebene aufspannt. In dieser orthogonal zur Mittelachse des Dosenkörpers angeordneten Ebene erstrecken sich beispielsweise die Einführöffnung und der mindestens eine nach aussen abstehende Stützflansch.

Die Gebäudewand weist eine Vorderseite auf, die dahin gerichtet ist, von wo aus die gebäudetechnischen Installationen an die - sich im an der Gebäudewand befestigtem Zustand befindliche - Leichtbaudose heranführbar sind. Die in die Leichtbaudose eingeführten gebäudetechnischen Installationen, können dann rückseitig mit verlegten elektrischen Kabeln verbunden werden. Der Stützflansch wird an die Vorderseite der Gebäudewand angelegt und stützt die Leichtbaudose derart an dieser Vorderseite ab, dass die Leichtbaudose nicht in die Gebäudewand-Ausnehmung hineinrutschen kann. Voraussetzung hierfür ist jedoch, dass die radiale Ausdehnung des Stützflansches grösser ist als die radiale Ausdehnung des Dosenkörpers, die durch den Umfang der umlaufenden Wand vorgegeben wird, da der Umfang der Gebäudewand-Ausnehmung in der Regel an den Umfang der umlaufenden Wand angepasst ist. Mit anderen Worten, der Stützflansch muss vom Dosenkörper nach aussen abstehen, um die gewünschte Stützwirkung an der Vorderseite der Gebäudewand bereitstellen zu können.

Das Schraubloch ist dazu ausgebildet, eine für ein Anschrauben der mindestens einen gebäudetechnischen Installation an die Leichtbaudose vorgesehene Schraube zumindest teilweise aufzunehmen.

Unter einer Erstreckung des mindestens einen Flügel entlang der umlaufenden Wand wird verstanden, dass sich der Flügel, von seiner Befestigungsstelle aussen an der umlaufenden Wand ausgehend, bis zu seiner Flügelspitze zumindest annähernd parallel zur umlaufenden Wand erstreckt. Zumindest annähernd parallel bedeutet dabei, dass die Erstreckung des Flügels nicht exakt parallel verlaufen muss, sondern eine Abweichung von beispielsweise 5 Grad bis 15 Grad, insbesondere 10 Grad, toleriert wird. Diese Abweichung kann beispielsweise daraus resultieren, dass die radiale Ausdehnung der umlaufenden Wand von der Einführöffnung bis zum Bodenbereich etwas abnimmt und/oder der Flügel von seiner Befestigungsstelle zu seiner Flügelspitze leicht schräg zur umlaufenden Wand angeordnet ist und sich so etwas von der um laufenden Wand abspreizt.

Unter einer Erstreckung des mindestens einen Flügel von der umlaufenden Wand beabstandet wird verstanden, dass der Flügel lediglich an seiner Befestigungsstelle die umlaufende Wand berührt und sich dann bis zu seiner Flügelspitze ohne weitere Berührung der umlaufenden Wand, beispielsweise mit einem Abstand von 1 mm bis 10 mm, erstreckt.

Eine entgegengesetzt zur axialen Richtung verlaufende Erstreckung des mindestens einen Flügel bedeutet, dass sich der Flügel, von seiner Befestigungsstelle aussen an der umlaufenden Wand ausgehend, in eine Richtung ausdehnt, die der Richtung einer koaxial oder parallel zur Mittelachse verlaufenden Geraden vom Bodenbereich zur Einführöffnung entspricht. Zumindest annähernd entgegengesetzt zur axialen Richtung verlaufend bedeutet dabei, dass sich der Flügel von seiner Befestigungsstelle zu seiner Flügelspitze leicht schräg zur besagten Gerade erstreckt. Leicht schräg bedeutet, dass zwischen der Erstreckung des Flügels und dieser Geraden ein Winkel von 5 Grad bis 15 Grad, insbesondere 10 Grad, vorliegt.

Da, wie zuvor bereits beschrieben, die als Hohlwand ausgestaltete Gebäudewand in der Regel eine geringe Wandstärke aufweist, um so den Hohlraum dahinter auszubilden, weist die Innenseite der Gebäudewand-Ausnehmung (mit anderen Worten: die Innenwand der Gebäudewand-Ausnehmung; die sich in die Gebäudewand-Ausnehmung erstreckende Fläche oder auch die Innenfläche der Gebäudewand-Ausnehmung) ebenfalls eine geringe Ausdehnung auf. Liegt nun der Stützflansch an der Vorderseite der Hohlwand an, besteht in axialer Richtung nur im vorderen Bereich der Leichtbaudose die Möglichkeit, diese durch Andrücken an die Innenseite der Gebäudewand-Ausnehmung mittels des Flügels zu befestigen. In einer exemplarischen Ausführungsform der erfindungsgemässen Leichtbaudose ist der mindestens eine Flügel daher in axialer Richtung im Bereich nahe des Stützflansches, insbesondere in axialer Richtung in der ersten Hälfte der Leichtbaudose, an der umlaufenden Wand angeordnet.

Die erfindungsgemässe Ausgestaltung der Leichtbaudose mit mindestens einem Flügel, der durch das Eindrehen einer für das Befestigen der gebäudetechnischen Installation an der Leichtbaudose vorgesehenen Schraube ausgelenkt wird und so die Leichtbaudose in der Gebäudewand-Ausnehmung fixiert, hat die nachfolgenden Vorteile gegenüber Leichtbaudosen des Stands der Technik.

So ist die Montage der Leichtbaudose in der Gebäudewand-Ausnehmung für den Monteur stark vereinfacht, da die Leichtbaudose lediglich in die Gebäudewand-Ausnehmung eingesetzt und dann die Schrauben zum Anschrauben der gebäudetechnischen Installation an der Leichtbaudose in die dafür vorgesehenen Schraublöcher eingedreht werden müssen, um so die Leichtbaudose in der Gebäudewand-Ausnehmung zu fixieren, ohne dass dabei ein zusätzliches Ausschwenken und Verfahren von Kippfüssen mittels speziell dafür vorgesehener Schrauben notwendig ist. Folglich kann ein ganzer Arbeitsschritt gegenüber der Montage von bisher bekannten Leichtbaudosen eingespart werden.

Weiterhin ist der mindestens eine Flügel einfach ausgestaltet, beispielsweise einteilig und klein, weshalb zum einen Material eingespart werden kann, da weder spezielle Kippfüsse noch die dafür benötigten Schrauben bereitgestellt werden müssen, und zum anderen eine schnelle sowie vereinfachte Fertigung des Flügels bzw. der erfindungsgemässen Leichtbaudose möglich ist, beispielsweise mittels Spritzgussverfahren. Auf diese Weise kann die erfindungsgemässe Leichtbaudose wesentlich einfacher, schneller und somit auch kostengünstiger hergestellt werden als Leichtbaudosen des Stands der Technik.

In einer exemplarischen Ausführungsform der erfindungsgemässen Leichtbaudose weist der zumindest durch die umlaufende Wand begrenzte Dosenkörper-Innenraum
- insbesondere an der Einführöffnung, einen Durchmesser von 66 mm bis 85 mm, insbesondere von 71,4 mm bis 79,2 mm, auf,
- eine in eine axiale Richtung, insbesondere von der Einführöffnung bis zum Bodenbereich, verlaufende Erstreckung von 42 mm bis 46 mm, insbesondere von 44,8 mm, auf, und/oder
- ein Volumen von 200 cm³ bis 300 cm³ auf.

Dadurch, dass bei der erfindungsgemässen Leichtbaudose auf die in den Dosenkörper-Innenraum hineinragenden Kippfuss-Führungen verzichtet werden kann, kann ein vergrösserter Durchmesser und somit auch ein vergrössertes Volumen (bzw. Fassungsvermögen) des Dosenkörper-Innenraums realisiert werden, ohne dabei den gewünschten Durchmesser des Dosenkörpers von 83 mm von Aussenwand zu Aussenwand zu überschreiten.

In einer weiteren exemplarischen Ausführungsform der erfindungsgemässen Leichtbaudose ist das mindestens eine Schraubloch als ein zumindest einseitig durch eine Schraubkanalöffnung geöffneter und in axialer Richtung verlaufender Schraubkanal (auch Sackbohrung genannt) ausgebildet.

In einer weiteren exemplarischen Ausführungsform weist der Schraubkanal eine Gesamtlänge, insbesondere von 5 mm bis 10 mm, auf, die kürzer ist als die Länge der mindestens einen für ein Anschrauben der mindestens einen gebäudetechnischen Installation an die Leichtbaudose vorgesehenen Schraube.

In einer weiteren Ausführungsform ist die mindestens eine für das Anschrauben der mindestens einen gebäudetechnischen Installation an die Leichtbaudose vorgesehene Schraube (in axialer Richtung) derart weit in den Schraubkanal eindrehbar, dass ein Schraubenteilstück der besagten Schraube den Schraubkanal auf einer der Schraubkanalöffnung gegenüberliegenden Seite wieder verlässt, wobei ein weiterer (in axialer Richtung verlaufender) Verlaufsweg des Schraubenteilstücks ausserhalb des Schraubkanals durch eine Ausrichtung des Schraubkanals vorgegeben wird.

Die Schraube wird zum Beispiel dann zumindest teilweise von dem Schraubenloch aufgenommen, wenn das Schraubenloch als ein Schraubkanal ausgebildet ist, der eine kürzere Länge aufweist als die Länge der Schraube, und die Schraube folglich den Schraubkanal mit der Schraubenspitze wieder verlässt, wenn die Schraube derart weit in den Schraubkanal eingedreht wird, dass der Schraubenkopf an der Schraubkanalöffnung anstösst.

In einer weiteren Ausführungsform ist der mindestens eine Flügel derart aussen an der umlaufenden Wand angeordnet, dass sich eine der umlaufenden Wand zugewandte Fläche des mindestens einen Flügels in den weiteren Verlaufsweg des Schraubenteilstücks erstreckt, und/oder wird das Schraubenteilstück derart auf die sich in den weiteren Verlaufsweg des Schraubenteilstücks erstreckende Fläche des mindestens einen Flügels geführt, dass der mindestens eine Flügel (durch einen von dem auf die besagte Fläche geführten Schraubenteilstück ausgeübten Drucks) in radialer Richtung ausgelenkt wird.

In einer weiteren Ausführungsform erstreckt sich die Schraubkanalöffnung in einer selben Ebene wie die Einführöffnung, und/oder liegt die Schraubkanalöffnung zumindest teilweise auf einem Umfang der umlaufenden Wand, so dass der Schraubkanal zumindest teilweise durch die umlaufende Wand begrenzt wird.

In einer weiteren Ausführungsform wird der Schraubkanal auf der der Schraubkanalöffnung gegenüberliegenden Seite (nach der Gesamtlänge des Schraubkanals) von einer (sich insbesondere radial erstreckenden) Kanalwand begrenzt, ist nach der Kanalwand die umlaufende Wand in Richtung des Dosenkörper-Innenraums eingewölbt, so dass die Kanalwand als Teil der umlaufenden Wand ausgebildet ist, ein Schraubenteilstück der durch den Schraubkanal eingedrehten Schraube die Kanalwand durchdringt und so den Schraubkanal wieder verlässt, und ein (in axialer Richtung verlaufender) weiterer Verlaufsweg des Schraubenteilstücks zumindest in einer Einwölbung der umlaufenden Wand ausserhalb des Dosenkörpers, insbesondere entlang der umlaufenden Wand und von der umlaufenden Wand beabstandet, verläuft, und ist der mindestens eine Flügel innerhalb der Einwölbung der umlaufenden Wand derart aussen an der umlaufenden Wand angeordnet, dass das ausserhalb des Dosenkörpers verlaufende Schraubenteilstück auf eine sich in den weiteren Verlaufsweg des Schraubenteilstücks erstreckende Fläche des mindestens einen Flügels geführt wird.

In einer weiteren Ausführungsform erstreckt sich die Einwölbung der umlaufenden Wand
- nach der Kanalwand in axialer Richtung bis zum Bodenbereich, und/oder
- zumindest über eine sich in axialer Richtung erstreckende Länge und/oder eine Breite, die einer sich in axialer Richtung erstreckenden Länge und/oder einer (zumindest annähernd tangential zur umlaufenden Wand verlaufenden) Breite des mindestens einen Flügels entspricht,
insbesondere wobei durch die Einwölbung die umlaufende Wand einen Verlauf gemäss einer Sekante durch die umlaufende Wand aufweist.

In einer weiteren Ausführungsform weist der mindestens eine Flügel eine plankonvexe oder bikonvexe oder konkavkonvexe Form auf, wobei eine der umlaufenden Wand zugewandte Fläche des mindestens einen Flügels eine konvexe Fläche ist.

Diese Ausführungsformen der erfindungsgemässen Leichtbaudose haben den Vorteil, dass der Monteur bei der Montage lediglich die Schraublöcher der gebäudetechnischen Installation mit den Schraubkanalöffnungen zur Deckung bringen muss, dann die jeweilige Schraube an den Kanal ansetzen kann und die Schraube (ohne weiteres Eingreifen durch den Monteur) entlang des Schraubkanals in die gewünschte Ausrichtung und Position geführt wird. Weiterhin sind die Länge und Ausrichtung des Schraubkanals sowie die Anordnung des Flügels aussen an der umlaufenden Wand, insbesondere innerhalb der Einwölbung der umlaufenden Wand, derart ausgestaltet, dass die Schraube, insbesondere die Schraubenspitze, derart auf den Flügel geführt wird, dass der Flügel in radialer Richtung ausgelenkt wird.

In einer weiteren Ausführungsform ist eine der umlaufenden Wand abgewandte Fläche des mindestens einen Flügels dazu ausgebildet, an die Innenseite der Gebäudewand-Ausnehmung angedrückt zu werden, und weist mindestens eine (zumindest annähernd tangential zur umlaufenden Wand verlaufenden und/oder sich über die gesamte Breite des Flügels erstreckende) rillenartige Vertiefung auf, wobei die mindestens eine rillenartige Vertiefung dazu ausgebildet ist, ein Verrutschen eines Presssitzes zwischen der der umlaufenden Wand abgewandten Fläche des mindestens einen Flügels und der Innenseite der Gebäudewand-Ausnehmung zu erschweren.

In einer weiteren Ausführungsform weist die mindestens eine rillenartige Vertiefung mindestens einen (insbesondere zumindest annähernd in axialer Richtung verlaufenden) Steg auf, wobei der mindestens eine Steg dazu ausgebildet ist, die mindestens eine rillenartige Vertiefung bzw. die gesamte Struktur des mindestens einen Flügel derart zu verstärken, dass der mindestens eine Flügel durch den von dem auf die der umlaufenden Wand zugewandten Fläche des mindestens einen Flügels geführten Schraubenteilstück ausgeübten Drucks nicht beschädigt wird.

In einer weiteren Ausführungsform sind der Dosenkörper, der mindestens eine nach aussen abstehende Stützflansch, und/oder der mindestens eine Flügel, einstückig ausgebildet.

In einer weiteren Ausführungsform sind der Dosenkörper, der mindestens eine nach aussen abstehende Stützflansch, und/oder der mindestens eine Flügel, mittels Spritzgussverfahren oder mittels 3D-Druckverfahren gefertigt.

In einer weiteren Ausführungsform ist der mindestens eine Flügel zweiteilig ausgebildet, wobei sich ein erster Teil des zweiteilig ausgebildeten Flügels in radialer Richtung, insbesondere um 1 mm bis 10 mm, von der umlaufenden Wand erhebt und sich ein zweiter Teil des zweiteilig ausgebildeten Flügels (insbesondere zumindest annähernd entgegengesetzt zur axialen Richtung), insbesondere um 5 mm bis 40 mm, entlang der umlaufenden Wand und von der umlaufenden Wand beabstandet erstreckt.

In einer weiteren Ausführungsform weist der mindestens eine Flügel eine Breite von 10 mm bis 30 mm auf.

In einer weiteren Ausführungsform bleibt der mindestens eine Flügel in noch nicht ausgelenktem Zustand in radialer Richtung hinter dem mindestens einen Stützflansch zurück und ragt in ausgelenktem Zustand in radialer Richtung über den mindestens einen Stützflansch hinaus.

In einer weiteren Ausführungsform sind der Dosenkörper, der mindestens eine nach aussen abstehende Stützflansch, und/oder der mindestens eine Flügel, aus einem Material, das einen der folgenden Kunststoffe aufweist, insbesondere überwiegend aus einem der folgenden Kunststoffe besteht: Polyethylen, Polypropylen, oder Polystyrol.

In einer weiteren Ausführungsform ist innerhalb des Bodenbereichs und/oder innerhalb der umlaufenden Wand mindestens eine Kabeleinführöffnung zur Einführung eines Kabels und/oder eines Kabelschutzrohres in den Dosenkörper-Innenraum angeordnet ist.

In einer weiteren Ausführungsform ist innerhalb der mindestens einen Kabeleinführöffnung eine Abdeckung angeordnet, wobei ein Rand der mindestens einen Kabeleinführöffnung mit einem Rand der Abdeckung über eine verjüngte Verbindungsstruktur derart verbunden ist, dass die Abdeckung mechanisch aus der mindestens einen Kabeleinführöffnung heraustrennbar ist, insbesondere wobei die Abdeckung durch zwei, insbesondere konzentrisch innerhalb der mindestens einen Kabeleinführöffnung angeordnete, Teilelemente ausgebildet ist.

In einer weiteren Ausführungsform ist der mindestens eine Stützflansch an der Einführöffnung angeordnet und erhebt sich in radialer Richtung, insbesondere von der umlaufenden Wand, um 5 mm bis 20 mm nach aussen.

In einer weiteren Ausführungsform weist die Leichtbaudose vier, insbesondere diametral angeordnete, Flügel auf, und/oder vier, insbesondere diametral angeordnete, nach außen abstehende Stützflansche auf.

In einer weiteren Ausführungsform bleibt jeweils eines der vier Flügel in noch nicht ausgelenktem Zustand in radialer Richtung hinter jeweils einem der vier Stützflansche zurück und ragt in ausgelenktem Zustand in radialer Richtung über den jeweiligen Stützflansch hinaus.

In einer weiteren Ausführungsform weist der mindestens eine Flügel eine maximale Materialstärke von 1 mm bis 5 mm auf.

In einer weiteren Ausführungsform weist der Bodenbereich eine Materialstärke von 1 mm bis 5 mm, die umlaufende Wand eine Materialstärke von 1 mm bis 5 mm, und/oder der mindestens eine Stützflansch eine Materialstärke von 0,1 mm bis 3 mm, insbesondere von 0,8 mm, auf.

In einer weiteren Ausführungsform erstreckt sich der zweite Teil des zweiteilig ausgebildeten Flügels mit einem Abstand entlang der umlaufenden Wand, der zumindest annähernd einer Erhebung des ersten Teils des zweiteilig ausgebildeten Flügels von der umlaufenden Wand entspricht.

In einer weiteren Ausführungsform erstreckt sich der zweite Teil des zweiteilig ausgebildeten Flügels ausgehend von einem Verbindungsbereich mit dem ersten Teil des zweiteilig ausgebildeten Flügels in Richtung der Einführöffnung des Dosenkörpers und/oder des mindestens einen Stützflansches.

In einer weiteren Ausführungsform weist der zweite Teil des zweiteilig ausgebildeten Flügels eine maximale Materialstärke, insbesondere von 2 mm bis 5 mm, auf, die grösser ist als die maximale Materialstärke, insbesondere von 1 mm bis 3 mm, des ersten Teils des zweiteilig ausgebildeten Flügels.

In einer weiteren Ausführungsform weist der zweite Teil des zweiteilig ausgebildeten Flügels eine plankonvexe oder bikonvexe oder konkavkonvexe Form aufweist, wobei eine der umlaufenden Wand zugewandte Fläche des zweiten Teils des zweiteilig ausgebildeten Flügels eine konvexe Fläche ist.

In einer weiteren Ausführungsform weist eine der umlaufenden Wand abgewandte Fläche des zweiten Teils des zweiteilig ausgebildeten Flügels eine, insbesondere gegenüber der umlaufenden Wand zumindest annähernd tangential verlaufende, rillenartige Vertiefung auf.

In einer weiteren Ausführungsform weist die der umlaufenden Wand abgewandte Fläche des zweiten Teils des zweiteilig ausgebildeten Flügels in der rillenartigen Vertiefung einen, insbesondere zumindest annähernd in axialer Richtung verlaufenden, Steg auf.

In einer weiteren Ausführungsform weist der erste Teil und/oder der zweite Teil des zweiteilig ausgebildeten Flügels eine Breite bzw. eine gegenüber dem Dosenkörper zumindest annähernd tangential verlaufende Erstreckung von 10 mm bis 30 mm auf.

### Kurzbeschreibung der Zeichnungen

Die erfindungsgemässe Leichtbaudose wird nachfolgend anhand von in den Figuren schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen. Im Einzelnen zeigen
- Fig. 1:: Seitenansicht einer exemplarischen Ausführungsform der erfindungsgemässen Leichtbaudose;
- Fig. 2:: Ansicht eines Querschnitts einer exemplarischen Ausführungsform der erfindungsgemässen Leichtbaudose;
- Fig. 3:: Frontansicht in den Dosenkörper-Innenraum einer exemplarischen Ausführungsform der erfindungsgemässen Leichtbaudose;
- Fig. 4A-4B:: perspektivische Ansichten einer exemplarischen Ausführungsform der erfindungsgemässen Leichtbaudose;
- Fig. 5A-5B:: schematische Darstellung des Auslenkens des Flügels in radialer Richtung durch eine Schraube.

### Detaillierte Beschreibung der Zeichnungen

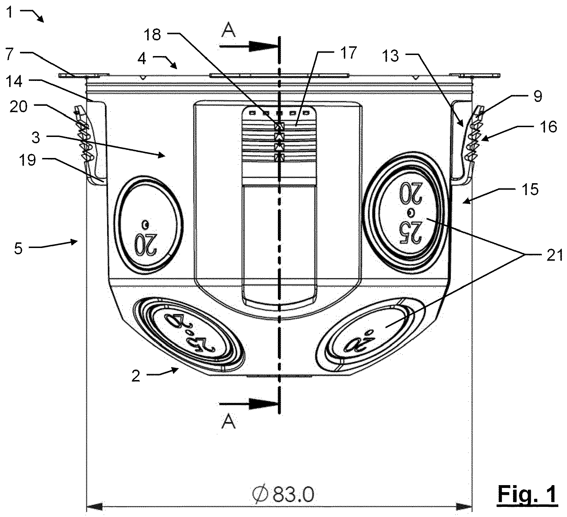

**Figur 1** zeigt eine Seitenansicht einer exemplarischen Ausführungsform der erfindungsgemässen Leichtbaudose 1, wobei der Dosenkörper 5 durch den Bodenbereich 2, die umlaufende Wand 3 und die dem Bodenbereich 2 gegenüberliegende Einführöffnung 4 gebildet wird. Unter dem Bodenbereich wird in dieser beispielhaften Ausführungsform der Leichtbaudose 1, der Bereich verstanden, bei dem die umlaufende Wand 3, bzw. in dieser Ausführungsform die Einwölbung 15 der umlaufenden Wand 3, nicht mehr annähernd parallel zur von der Einführöffnung 4 bis zum Bodenbereich 2 verlaufenden Mittelachse des Dosenkörpers 5 verläuft, sondern sich hin zur Mittelachse (abgerundet) einwölbt. Mit anderen Worten, bildet der Dosenkörper eine Art Topf aus. Die Mittelachse des Dosenkörpers 5 liegt dabei in der gezeigten Querschnittsfläche A-A.

Sowohl die umlaufende Wand 3, bzw. in dieser Ausführungsform die Einwölbung 15 der umlaufenden Wand 3, als auch der Bodenbereich 2 weisen mehrere Kabeleinführöffnungen 21 auf, die jeweils mit heraustrennbaren Abdeckungen verschlossen sind. Die jeweilige Abdeckung ist dabei einteilig oder bestehend aus unterschiedlich grossen, konzentrisch angeordneten Teilelementen ausgebildet. Je nachdem welche der Teilelemente herausgetrennt wird, weist die so freigelegte Kabeleinführöffnung 21 einen Durchmesser von 20 mm oder 25 mm auf.

Die gezeigte Ausführungsform der Leichtbaudose 1 weist vier Flügel 9 auf (in **Figur 1** sind nur drei der vier Flügel 9 zu sehen), wobei jeweils einer der vier Flügel 9 zweiteilig mit dem ersten Teil 19 und dem zweiten Teil 20 ausgebildet ist. Weiterhin sind jeweils zwei der vier Flügel 9 diametral aussen an der umlaufenden Wand 3, insbesondere in der Einwölbung 15 der umlaufenden Wand 3, angeordnet, wobei die vier Flügel 9 entlang der umlaufenden Wand 3 gleich weit voneinander beabstandet sind.

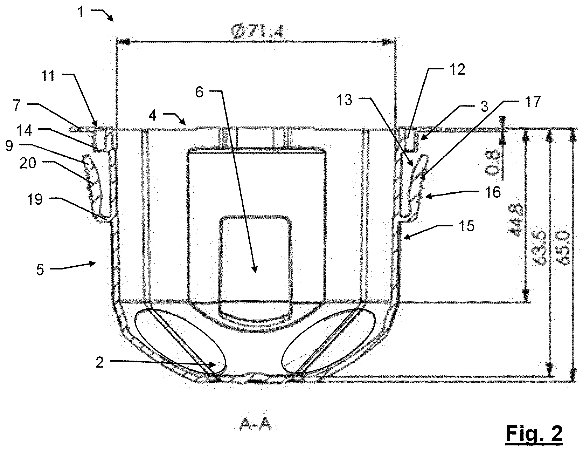

**Figur 2** zeigt eine Ansicht eines Querschnitts einer exemplarischen Ausführungsform der erfindungsgemässen Leichtbaudose 1 entlang der Querschnittsfläche A-A.

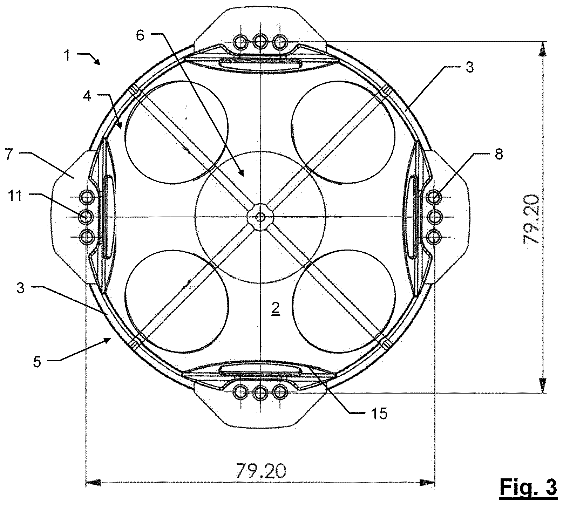

**Figur 3** zeigt eine Frontansicht in den Dosenkörper-Innenraum 6 einer exemplarischen Ausführungsform der erfindungsgemässen Leichtbaudose 1, wobei die Leichtbaudose 1 vier Stützflansche 7 aufweist. Jeweils zwei der vier Stützflansche 7 sind diametral an der Einführöffnung 4 angeordnet und erheben sich in radialer Richtung von der umlaufenden Wand 3, wobei die vier Stützflansche 7 entlang der umlaufenden Wand 3 gleich weit voneinander beabstandet sind. Der nach Aussen gerichtete Teil der umlaufenden Wand 3 wird dabei auch als (Dosenkörper-)Aussenwand bezeichnet. An den Positionen an der um laufenden Wand 3, an denen die vier Stützflansche 7 angeordnet sind, ist zum einen die umlaufende Wand 3 mit einer grösseren Materialstärke / Dicke ausgebildet, wobei sich die umlaufende Wand dadurch in das Dosenkörperinnere 6 erstreckt, und sind zum anderen jeweils drei Schraublöcher 8 (bzw. Schraubkanäle 12 / Sackbohrungen 12) angeordnet, wobei die Schraubkanäle 12 in den entsprechenden Bereichen innerhalb der verstärkten umlaufenden Wand 3 verlaufen. Weiterhin zeigt **Figur 3****,** dass die vier Einwölbungen 15 der umlaufenden Wand 3 ebenfalls an den Positionen der Stützflansche 7 und der Schraubkanäle 12 vorliegen, insbesondere wobei die Einwölbungen 15 jeweils gemäss dem Verlauf einer Sekante durch die umlaufende Wand 3 ausgebildet sind.

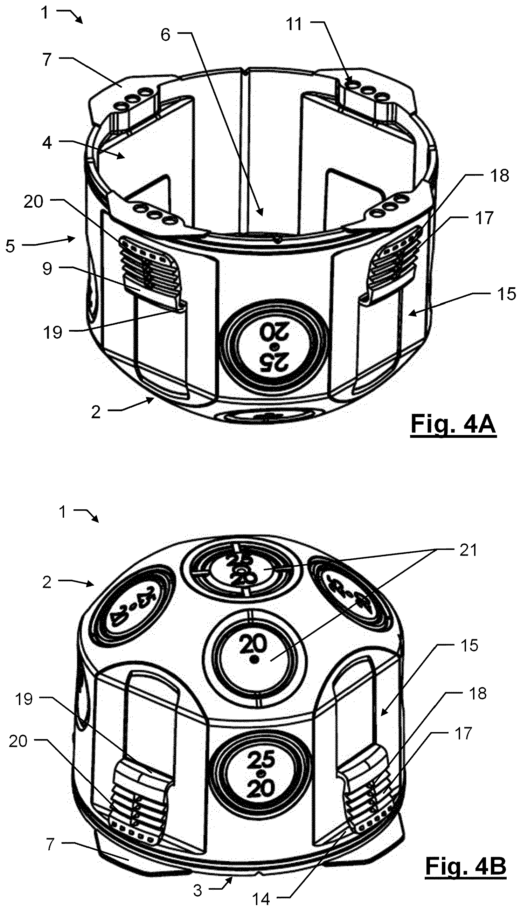

Die **Figuren 4A** und **4B** zeigen perspektivische Ansichten einer exemplarischen Ausführungsform der erfindungsgemässen Leichtbaudose 1.

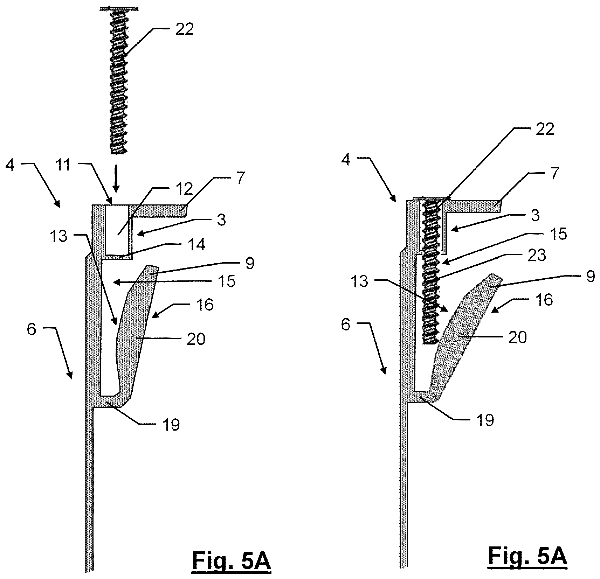

Die **Figuren 5A** und 5B zeigen eine schematische Darstellung des Auslenkens des Flügels 9 in radialer Richtung durch eine Schraube 22. Die Schraube 22 wird zum Anschrauben der gebäudetechnischen Installation an die Leichtbaudose 1 und zum Anschrauben der Leichtbaudose 1 an die Gebäudewand durch das als einseitig geöffneter Schraubkanal 12 (oder auch Sackbohrung 12) ausgebildete Schraubloch 8 geführt, wobei der Verlaufsweg der Schraube 22 durch die Ausrichtung des Schraubkanals 12 vorgegeben ist. Da die Schraube deutlich länger ist als der Schraubkanal 12 / die Sackbohrung 12 durchdringt sie die Kanalwand 14, wobei der Teil der Schraube 22, der ausserhalb des Schraubkanals 22 entlang der umlaufenden Wand 3 verläuft als Schraubenteilstück 23 bezeichnet wird. Wird die Schraube 22 bis zum Anschlag in den Schraubkanal 12 eingedreht, so wird dieses Schraubenteilstück 23 auf die der umlaufenden Wand 3 zugewandten Fläche 13 des Flügels 9 geführt und drückt den Flügel somit zur Seite. Der Flügel ist in der gezeigten Ausführungsform zweiteilig ausgebildet, wobei der zweite Teil 20 eine plankonvexe Form aufweist, wobei die Fläche 13 die konvexe Fläche ist.

Das Schraubloch 8 (bzw. in dieser Ausführungsform der Schraubkanal 12) und der Flügel 9 sind folglich so ausgebildet und angeordnet, dass durch das Eindrehen der Schraube 22 in das Schraubloch 8 / den Schraubkanal 12, sowohl die gebäudetechnische Installation an die Leichtbaudose 1 angeschraubt wird, als auch ein Auslenken Flügels 9 in radialer Richtung bereitgestellt wird.

Die gezeigten Bemessungen der jeweiligen Teile der Leichtbaudose 1 in den **Figuren 1 bis 3** beziehen sich jeweils auf Angaben im Millimeterbereich.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Leichtbaudose (1) für gebäudetechnische Installationen, insbesondere elektrische Installationsgeräte, wobei die Leichtbaudose (1) vorgesehen ist in einer Ausnehmung einer Gebäudewand befestigt zu werden, wobei die Leichtbaudose (1) aufweist:
• einen durch einen Bodenbereich (2), eine umlaufende Wand (3) und eine dem Bodenbereich (2) gegenüberliegende Einführöffnung (4) gebildeten Dosenkörper (5), wobei
∘ ein zumindest durch die umlaufende Wand (3) begrenzter Dosenkörper-Innenraum (6) zur Aufnahme mindestens einer gebäudetechnischen Installation ausgebildet ist, und
∘ die mindestens eine gebäudetechnische Installation durch die Einführöffnung (4) in den Dosenkörper-Innenraum (6) einführbar ist,
• mindestens einen nach aussen abstehenden Stützflansch (7), wobei der mindestens eine Stützflansch (7) zum Angelegtwerden an einer Vorderseite der Gebäudewand ausgebildet ist, und
• mindestens ein Schraubloch (8), wobei die mindestens eine gebäudetechnische Installation vorgesehen ist, durch mindestens eine in das Schraubloch (8) eingedrehte Schraube (22) an die Leichtbaudose (1) angeschraubt zu werden,
**dadurch gekennzeichnet, dass**
die Leichtbaudose (1) mindestens einen Flügel (9) aufweist, wobei der mindestens eine Flügel (9)
• dazu ausgebildet ist, an eine Innenseite der Gebäudewand-Ausnehmung angedrückt zu werden und somit die Leichtbaudose (1) in der Gebäudewand-Ausnehmung zu befestigen,
• aussen an der umlaufenden Wand (3) angeordnet ist, und
• sich entlang der umlaufenden Wand (3) und von der umlaufenden Wand (3) beabstandet erstreckt,
wobei der mindestens eine Flügel (9) und das mindestens eine Schraubloch (8) derart ausgebildet und angeordnet sind, dass durch ein Eindrehen der mindestens einen Schraube (22) in das mindestens eine Schraubloch (8), sowohl die mindestens eine gebäudetechnische Installation an die Leichtbaudose (1) angeschraubt wird, als auch ein Auslenken des mindestens einen Flügels (9) in radialer Richtung bereitgestellt wird, sodass der mindestens eine Flügel (9) gegen die Innenseite der Gebäudewand-Ausnehmung angedrückt wird.

2. Leichtbaudose (1) nach Anspruch 1, wobei der zumindest durch die umlaufende Wand (3) begrenzte Dosenkörper-Innenraum (6)
• insbesondere an der Einführöffnung (4), einen Durchmesser von 66 mm bis 85 mm, insbesondere von 71,4 mm bis 79,2 mm, aufweist,
• eine in eine axiale Richtung, insbesondere von der Einführöffnung (4) bis zum Bodenbereich (2), verlaufende Erstreckung von 42 mm bis 46 mm, insbesondere von 44,8 mm, aufweist, und/oder
• ein Volumen von 200 cm³ bis 300 cm³ aufweist.

3. Leichtbaudose (1) nach Anspruch 1 oder 2, wobei das mindestens eine Schraubloch (8) als ein zumindest einseitig durch eine Schraubkanalöffnung (11) geöffneter und in axialer Richtung verlaufender Schraubkanal (12) ausgebildet ist.

4. Leichtbaudose (1) nach Anspruch 3, wobei der Schraubkanal (12) eine Gesamtlänge, insbesondere von 5 mm bis 10 mm, aufweist, die kürzer ist als die Länge der mindestens einen für ein Anschrauben der mindestens einen gebäudetechnischen Installation an die Leichtbaudose (1) vorgesehenen Schraube (22).

5. Leichtbaudose (1) nach Anspruch 3 oder 4, wobei die mindestens eine für das Anschrauben der mindestens einen gebäudetechnischen Installation an die Leichtbaudose (1) vorgesehene Schraube (22) derart weit in den Schraubkanal (12) eindrehbar ist, dass ein Schraubenteilstück (23) der besagten Schraube (22) den Schraubkanal (12) auf einer der Schraubkanalöffnung (11) gegenüberliegenden Seite wieder verlässt, wobei ein weiterer Verlaufsweg des Schraubenteilstücks (23) ausserhalb des Schraubkanals (12) durch eine Ausrichtung des Schraubkanals (12) vorgegeben wird.

6. Leichtbaudose (1) nach Anspruch 5, wobei
• der mindestens eine Flügel (9) derart aussen an der umlaufenden Wand (3) angeordnet ist, dass sich eine der umlaufenden Wand (3) zugewandte Fläche (13) des mindestens einen Flügels (9) in den weiteren Verlaufsweg des Schraubenteilstücks (23) erstreckt, und/oder
• das Schraubenteilstück (23) derart auf die sich in den weiteren Verlaufsweg des Schraubenteilstücks (23) erstreckende Fläche (13) des mindestens einen Flügels (9) geführt wird, dass der mindestens eine Flügel (9) in radialer Richtung ausgelenkt wird.

7. Leichtbaudose (1) nach einem der Ansprüche 3 bis 6, wobei
• sich die Schraubkanalöffnung (11) in einer selben Ebene wie die Einführöffnung (4) erstreckt, und/oder
• die Schraubkanalöffnung (11) zumindest teilweise auf einem Umfang der umlaufenden Wand (3) liegt, so dass der Schraubkanal (12) zumindest teilweise durch die umlaufende Wand (3) begrenzt wird.

8. Leichtbaudose (1) nach Anspruch 7, wobei
• der Schraubkanal (12) auf der der Schraubkanalöffnung (11) gegenüberliegenden Seite von einer Kanalwand (14) begrenzt wird,
• nach der Kanalwand (14) die umlaufende Wand (3) in Richtung des Dosenkörper-Innenraums (6) eingewölbt ist, so dass
o die Kanalwand (14) als Teil der umlaufenden Wand (3) ausgebildet ist,
∘ ein Schraubenteilstück (23) der durch den Schraubkanal (12) eingedrehten Schraube (22) die Kanalwand (14) durchdringt und so den Schraubkanal (12) wieder verlässt, und
∘ ein weiterer Verlaufsweg des Schraubenteilstücks (23) zumindest in einer Einwölbung (15) der umlaufenden Wand (3) ausserhalb des Dosenkörpers (5), insbesondere entlang der umlaufenden Wand (3) und von der umlaufenden Wand (3)beabstandet, verläuft, und
• der mindestens eine Flügel (9) innerhalb der Einwölbung (15) der um laufenden Wand (3) derart aussen an der um laufenden Wand (3) angeordnet ist, dass das ausserhalb des Dosenkörpers (5) verlaufende Schraubenteilstück (23) auf eine sich in den weiteren Verlaufsweg des Schraubenteilstücks (23) erstreckende Fläche (13) des mindestens einen Flügels (9) geführt wird.

9. Leichtbaudose (1) nach Anspruch 8, wobei sich die Einwölbung (15) der umlaufenden Wand (3)
• nach der Kanalwand (14) in axialer Richtung bis zum Bodenbereich (2) erstreckt, und/oder
• zumindest über eine sich in axialer Richtung erstreckende Länge und/oder eine Breite erstreckt, die einer sich in axialer Richtung erstreckenden Länge und/oder einer Breite des mindestens einen Flügels (9) entspricht.
insbesondere wobei durch die Einwölbung (15) die umlaufende Wand (3) einen Verlauf gemäss einer Sekante durch die umlaufende Wand (3) aufweist.

10. Leichtbaudose (1) nach einem der vorhergehenden Ansprüche, wobei der mindestens eine Flügel (9) eine plankonvexe oder bikonvexe oder konkavkonvexe Form aufweist, wobei eine der umlaufenden Wand (3) zugewandte Fläche (13) des mindestens einen Flügels (9) eine konvexe Fläche ist.

11. Leichtbaudose (1) nach einem der vorhergehenden Ansprüche, wobei eine der umlaufenden Wand (3) abgewandte Fläche (16) des mindestens einen Flügels (9)
• dazu ausgebildet ist, an die Innenseite der Gebäudewand-Ausnehmung angedrückt zu werden, und
• mindestens eine rillenartige Vertiefung (17) aufweist.

12. Leichtbaudose (1) nach Anspruch 11, wobei die mindestens eine rillenartige Vertiefung (17) mindestens einen Steg (18) aufweist.

13. Leichtbaudose (1) nach einem der vorhergehenden Ansprüche, wobei
• der Dosenkörper (5),
• der mindestens eine nach aussen abstehende Stützflansch (7), und/oder
• der mindestens eine Flügel (9),
einstückig ausgebildet sind.

14. Leichtbaudose (1) nach einem der vorhergehenden Ansprüche, wobei
• der Dosenkörper (5),
• der mindestens eine nach aussen abstehende Stützflansch (7), und/oder
• der mindestens eine Flügel (9),
mittels Spritzgussverfahren oder mittels 3D-Druckverfahren gefertigt sind.

15. Leichtbaudose (1) nach einem der vorhergehenden Ansprüche, wobei der mindestens eine Flügel (9) zweiteilig ausgebildet ist, wobei sich ein erster Teil (19) des zweiteilig ausgebildeten Flügels (9) in radialer Richtung, insbesondere um 1 mm bis 10 mm, von der umlaufenden Wand (3) erhebt und sich ein zweiter Teil (20) des zweiteilig ausgebildeten Flügels (9), insbesondere um 5 mm bis 40 mm, entlang der umlaufenden Wand (3) und von der um laufenden Wand (3) beabstandet erstreckt.
